# EUROPÄISCHE PATENTSCHRIFT

(11) **EP 0 474 809 B1**
(45) Veröffentlichungstag und Bekanntmachung des Hinweises auf die Patenterteilung: **13.07.1994**
(21) Anmeldenummer: 91905401.5
(22) Anmeldetag: 01.03.1991
(51) Int. Cl.: B21F 27/10, B21F 23/00

(54) **DOPPELPUNKTSCHWEISSMASCHINE**
DOUBLE-POINT WELDING MACHINE
SOUDEUSE A POINT DOUBLE

(30) Priorität: 30.03.1990 AT 743/90
(43) Veröffentlichungstag der Anmeldung: 18.03.1992
(73) Patentinhaber: EVG Entwicklungs- u. Verwertungs- Gesellschaft m.b.H., A-8074 Raaba (AT)
(72) Erfinder: RITTER, Gerhard, A-8043 Graz (AT); RITTER, Klaus, A-8042 Graz (AT); SCHERR, Rudolf, A-8045 Graz (AT); GRABUSCHNIG, Josef, A-8043 Graz (AT)
(74) Vertreter: Holzer, Walter, Dipl.-Ing.
(86) Internationale Anmeldenummer: AT9100036
(87) Internationale Veröffentlichungsnummer: WO9115317

(56) Entgegenhaltungen:
- EP-A- 073 336
- AT-A- 267 292
- US-A- 1 811 585
- US-A- 4 068 110

## Beschreibung

Die Erfindung bezieht sich auf eine Doppelpunktschweißmaschine zum Herstellen von Drahtgittern aus einander rechtwinkelig kreuzenden Längs- und Querdrähten, mit in Längsdrahtvorschubrichtung in vorbestimmtem, gegenseitigen Abstand angeordneten, quer zur Längsdrahtvorschubrichtung verlaufenden Schweißlinien aus Ober- und Unterelektroden, mit einer Vorrichtung zum Zuführen von zwei Querdrähten längs zweier, quer zur Längsdrahtvorschubrichtung verlaufender, vor den Schweißlinien in deren vorbestimmtem Abstand zueinander angeordneter Einschußlinien, mit einer Vorrichtung zum Überführen der Querdrähte von den Einschußlinien in die Schweißlinien, wobei diese Vorrichtung mehrere an einem gemeinsamen Tragbalken befestigte, mit im Abstand der Einschußlinien angeordneten Ausnehmungen für die Querdrähte versehene Tragarme aufweist. die mittels des Tragbalkens in Längsdrahtvorschubrichtung zyklisch vor- und zurückbewegbar sind, und mit einer Steuereinrichtung, über welche eine Elektrodenreihe je Schweißlinie taktweise heb- und senkbar und die Zuführund Überführvorrichtungen betätigbar sind.

Aus der AT-PS 267 292 ist eine Gitterschweißmaschine dieser Art bekannt, bei der zwei Querdrähte entlang von vor den Schweißlinien angeordneten Einschußlinien zugeführt und zusammen mit den Längsdrähten mittels einer Transportvorrichtung in die Schweißlinien vorgeschoben werden. Die Transportvorrichtung weist mehrere, an einem gemeinsamen Tragbalken befestigte Transportschienen auf, die mit Paaren von Haken zur Aufnahme der Querdrähte und mit ebenfalls an den Querdrähten angreifenden Paaren von Haken zum gleichzeitigen Herausziehen des geschweißten Gitters aus den Schweißlinien versehen sind. Die Abstände der Haken jedes Paares entsprechen der gewünschten Querdrahtteilung im fertigen Gitter, wodurch diese Teilung sehr genau und exakt reproduzierbar eingehalten wird. Diese Vorrichtung hat den Nachteil, daß bei größerer Produktionsgeschwindigkeit die Querdrähte durch die Haken deformiert werden und daß außerdem der für diese große Produktionsgeschwindigkeit notwendigerweise besonders robust ausgeführte Vorschubmechanismus aufgrund der Massenträgheit den geforderten raschen Bewegungsablauf nicht gewährleisten kann.

Aus der EP-A-0 073 336 ist eine Vorschubvorrichtung für Längsdrähte bekannt, die vor der Schweißlinie angeordnet ist und aus je einer oberhalb und unterhalb der Längsdrähte angeordneten Transportwalze oder aus mehreren Transportrollenpaaren je Längsdraht besteht. Eine in Längsdrahtvorschubrichtung gesehen hinter der Schweißlinie angeordnete Greifeinrichtung ermöglicht den Vorschub des Gitters, wenn die Restlängen der Längsdrähte die oben beschriebene Vorschubvorrichtung verlassen haben. Zum Einschieben der Querdrähte werden die Transportwalzen bzw. Transportrollenpaare über ein Schrittsteuerprogramm taktweise betätigt, wobei dieses Programm mittels eines den Längsdrahtvorschub kontrollierenden Meßgerätes korrigiert wird. Die Vorrichtung hat den Nachteil, daß aufwendige Meßund Steuereinrichtungen für den Vorschub der Längsdrähte notwendig sind, um einen ungleichmäßigen Vorschub bedingt durch unterschiedlichen Verschleiß der Transportwalzen bzw. Transportrollenpaare und damit eine falsche Gittergeometrie zu vermeiden.

Aufgabe der Erfindung ist es, eine Maschine der einleitend angegebenen Art zu schaffen, die unter Ausnützung der Vorteile der beiden geschilderten bekannten Vorrichtungen eine höhere Produktionsgeschwindigkeit als diese ermöglicht und dabei jegliche Gefahr einer Verformung der Querdrähte vermeidet. Die erfindungsgemäße Maschine zeichnet sich dadurch aus, daß mit einer an sich bekannten, über die Steuereinrichtung betätigbaren Vorrichtung zum Vorschieben der Längsdrähte zu den Schweißlinien zugleich das geschweißte Drahtgitter aus den Schweißlinien ausschiebbar ist, daß die Geschwindigkeit der Vorlaufbewegung des Tragbalkens und die Geschwindigkeit des Arbeitstaktes der Längsdraht-Vorschubvorrichtung unterschiedlich groß sind und die Dauer der Vorlaufbewegung des Tragbalkens größer als die Dauer des Arbeitstaktes der Längsdraht-Vorschubvorrichtung ist, und daß eine Einspannvorrichtung vorgesehen ist, mit welcher die Querdrähte während des Überfüh rens aus den Einschußlinien in die Schweißlinien formschlüssig und relativ zu den Längsdrähten verschiebbar festhaltbar sind.

Mit dieser Konstruktion wird eine hohe Produktionsgeschwindigkeit der Schweißmaschine erreicht, weil die Überführvorrichtung für die Querdrähte, die keinen Vorschub des geschweißten Gitters zu bewirken braucht, leichter als bisher ausgebildet werden kann, was es ermöglicht, sie kontinuierlich zu betreiben und ihre Bewegungsgeschwindigkeit zu erhöhen; zugleich werden die Querdrähte ohne gegenseitige Relativbewegung in die Schweißlinien befördert, wo sie mit den Längsdrähten exakt verschweißt werden können. Dabei wird jegliche Gefahr einer Verformung der Querdrähte vor und nach dem Verschweißen mit den Längsdrähten vermieden.

Gemäß einer bevorzugten Ausführungsform der Erfindung weist die Einspannvorrichtung auf der den Tragarmen gegenüberliegenden Seite der Querdrähte eine Anschlageinrichtung für die Querdrähte auf. Diese Anschlageinrichtung kann mehrere Anschlagschienen aufweisen, die sich je in den Lücken zwischen den Längsdrähten von der in Längsdrahtvorschubrichtung ersten Querdraht-Einschußlinie bis zumindest zu der in Längsdrahtvorschubrichtung zweiten Schweißlinie erstrecken und an ihrer Unterseite mit einer Anschlag- und Gleitfläche versehen sind. Ferner weist die Anschlageinrichtung zweckmäßig Führungen auf, die mit einer den Querdrähten zugekehrten Anschlag- und Gleitfläche und mit einer Nut zur Aufnahme mindestens eines Längsdrahtes versehen sind.

Die Längsdraht-Vorschubvorrichtung ist vorzugsweise mit mehreren, gemeinsam antreibbaren Rollenpaaren je Längsdraht ausgestattet und kann über die Steuereinrichtung in einem von der durch den gegenseitigen Abstand der Schweißlinien bedingten Querdrahtteilung abweichenden Arbeitstakt betätigbar sein.

Zum anfänglichen Festhalten der Querdrähte sind entlang der Einschußlinien der Querdrähte mehrere, an die Querdrähte federnd anpreßbare Anpreßfinger angeordnet.

Die Erfindung wird nachfolgend an einem Ausführungsbeispiel unter Bezugnahme auf die Zeichnungen näher erläutert. Es zeigen:
Fig. 1 in der Draufsicht schematisch eine Schweißmaschine gemäß der Neuerung;
Fig. 2 eine Seitenansicht der Maschine nach Fig. 1;
Fig. 3 eine Anschlag- und Führungseinrichtung der Schweißmaschine im Detail, und
Fig. 4 in Form eines Geschwindigkeits-Zeit-Diagrammes den Arbeitstakt der Vorschubvorrichtung für die Längsdrähte und den Arbeitszyklus der Überführvorrichtung für die Querdrähte.

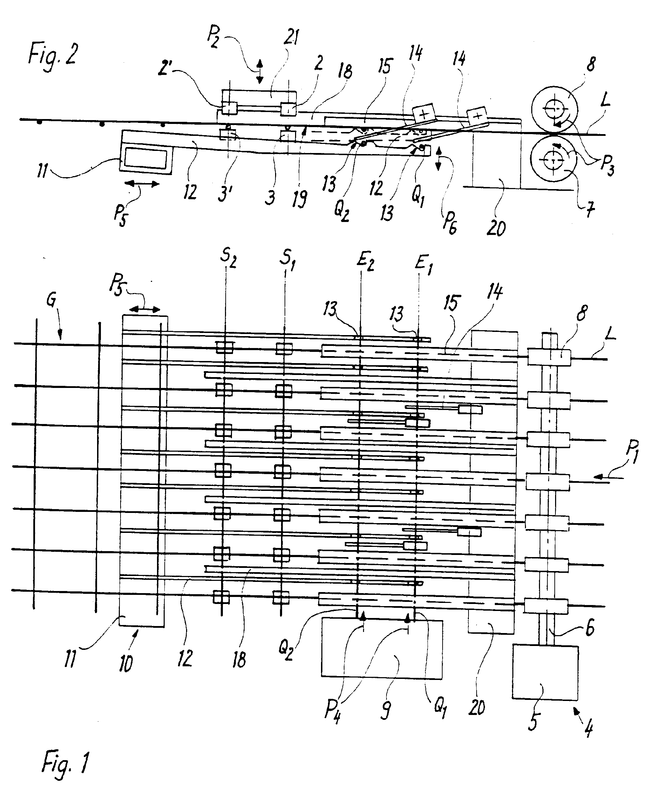

Gemäß den Fig. 1 und 2 wird der Schweißmaschine 1 von nicht dargestellten Vorratstrommeln eine Schar von Längsdrähten L in Richtung des Pfeiles P₁ zugeführt. Die Schweißmaschine 1 arbeitet nach der Doppelpunktschweißmethode und ist befähigt, gleichzeitig zwei Querdrähte Q₁ und Q₂ mit der Längsdrahtschar zu verschweißen.

Entlang zweier, quer zur Längsdrahtvorschubrichtung P₁ verlaufender, in festem Abstand zueinander angeordneter Schweißlinien S₁ und S₂ sind jeweils zwei Reihen von Oberelektroden 2, 2' und von Unterelektroden 3, 3' oberhalb bzw. unterhalb der durch die Längsdrahtschar definierten Zuführebene angeordnet. Die Oberelektroden 2 der einen Reihe sind mit den Oberelektroden 2' der anderen Reihe durch eine in Fig. 2 dargestellte Strombrücke 21 elektrisch leitend verbunden, während die zugeordneten Unterelektroden 3 bzw. 3' mit den Anschlüssen einer nicht dargestellten Schweißstromversorgung verbunden sind. Die Strombrücke 21 und die Oberelektroden 2, 2' werden im Arbeitstakt der Schweißmaschine mit Hilfe nicht dargestellter, über eine nicht gezeigte Steuereinrichtung betätigbarer Schweißzylinder entsprechend dem Doppelpfeil P₂ gehoben und gesenkt. Bei jedem Arbeitstakt der Schweißmaschine wird mit der Längsdrahtschar ein Querdrahtpaar verschweißt, wobei der Abstand der beiden Querdrähte dem gegenseitigen Abstand S̅₁̅ S̅₂̅ der Schweißlinien S₁, S₂ entspricht.

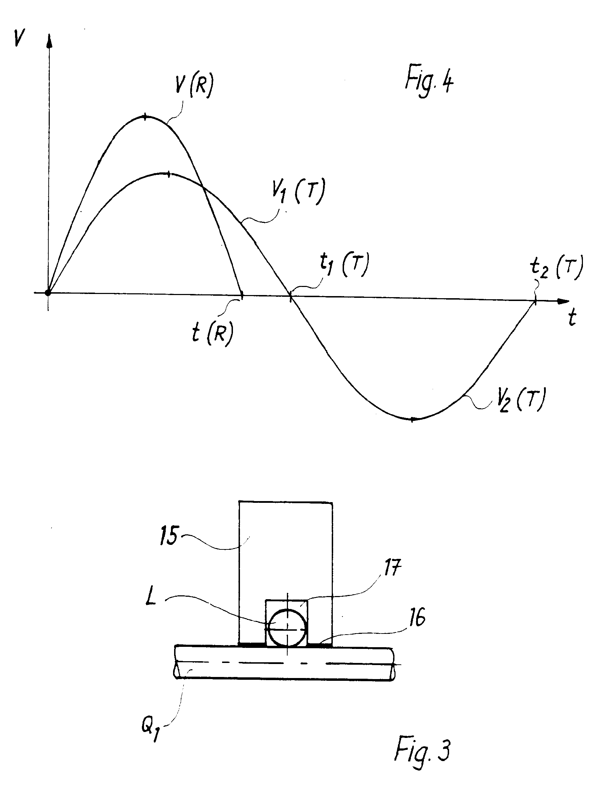

Mit Hilfe einer Vorschubvorrichtung 4, die im wesentlichen eine unterhalb der Zuführebene angeordnete, mittels einer Antriebseinrichtung 5 in Richtung des Pfeiles P₃ antreibbare Welle 6 sowie mit dieser Welle 6 drehfest verbundene Antriebsrollen 7, deren Anzahl der Anzahl der Längsdrähte entspricht, und an diese Rollen angepreßte Gegenrollen 8 oberhalb der Zuführebene aufweist, werden die Längsdrähte L in die Schweißlinien S₁, S₂ vorgeschoben und das fertiggeschweißte Gitter G aus den Schweißlinien S₁, S₂ herausgeschoben. Die Antriebsrollen 7 werden, wie in Fig. 4 dargestellt, taktweise mit wählbarer Geschwindigkeit und Dauer über die nicht dargestellte Steuereinrichtung der die Längsdrähte dabei während eines Arbeitstaktes zurücklegen, ist frei wählbar und legt als sogenannte Auszugteilung die Abstände zwischen den Paaren von gleichzeitig verschweißten Querdrähten fest. Wenn die Vorschubstrecke genau dem doppelten Betrag des Abstandes S̅₁̅ S̅₂̅ des Querdrahtpaares entspricht, werden die Abstände zwischen den Querdrahtpaaren gleich dem Abstand S̅₁̅ S̅₂̅, so daß eine gleichmäßige Querdrahtteilung im Gitter entsteht. In allen übrigen Fällen wird die Auszugteilung kleiner oder größer als dieser Abstand S̅₁̅ S̅₂̅.

Mit Hilfe einer nur schematisch angedeuteten Zuführvorrichtung 9, die im wesentlichen eine Richt-, Vorschubund Meßeinrichtung sowie eine Schere aufweist, werden der Schweißmaschine seitlich in Richtung des Pfeiles P₄ Querdrähte Q₁ und Q₂ zugeführt. Die Querdrahtzufuhr erfolgt über nicht gezeigte Kanäle entlang zweier, mit festem Abstand voneinander und in Längsdrahtvorschubrichtung P₁ gesehen vor den Schweißlinien S₁, S₂ angeordneter Einschußlinien E₁, E₂. Der gegenseitige Abstand der beiden Einschußlinien E₁, E₂ entspricht dem gegenseitigen Abstand der Schweißlinien S₁, S₂.

Mit Hilfe einer Überführvorrichtung 10 werden die Querdrähte Q₁, Q₂ von den Einschußlinien E₁, E₂ in die Schweißlinien S₁, S₂ befördert. Die Querdraht-Überführvorrichtung 10 weist einen entsprechend dem Doppel pfeil P₅ kontinuierlich zwischen einer Querdraht-Aufnahmestellung und einer Querdraht-Abgabestellung hin- und herbewegbaren, schwenkbar gelagerten Tragbalken 11 auf. Der Tragbalken 11 liegt in Längsdraht-Vorschubrichtung P₁ gesehen hinter den Schweißlinien S₁, S₂ und erstreckt sich über die gesamte Breite der Schweißmaschine 1. Die Bewegung des Tragbalkens 11 wird durch eine nicht gezeigte Antriebseinrichtung bewirkt und von der Steuereinrichtung der Schweißmaschine gesteuert. An seiner den Schweißlinien S₁, S₂ zugekehrten Seite ist der Tragbalken 11 mit mehreren, in der Querdraht-Aufnahmestellung bis in die Einschußlinien E₁, E₂ auskragenden Tragarmen 12 versehen, die je zwischen den Längsdrähten L angeordnet sind und aufgrund der Verschiebe- und Schwenkbewegung des Tragbalkens 11 eine entsprechende Verschiebebewegung entsprechend dem Doppelpfeil P₅ sowie eine entsprechende Schwenkbewegung entsprechend dem Doppelpfeil P₆ ausführen.

Wie in Fig. 2 dargestellt ist, besitzen die Tragarme 12 an ihren freien Enden zwei Ausnehmungen 13, deren gegenseitiger Abstand dem gegenseitigen Abstand der Einschußlinien E₁, E₂ entspricht und die zu Beginn des Arbeitstaktes der Querdraht-Überführvorrichtung 10 genau mit den Einschußlinien fluchten. Zwischen den Längsdrähten L sind mehrere an die Querdrähte federnd angedrückte Anpreßfinger 14 vorgesehen, die vor der Schwenkbewegung der Tragarme 12 die Querdrähte in den Ausnehmungen 13 halten.

Das Überführen der Querdrähte Q₁, Q₂ von den Einschußlinien E₁, E₂ in die Schweißlinien S₁, S₂ geschieht in folgender Weise: die Tragarme 12 schwenken mit den Querdrähten Q₁, Q₂ aus der in Fig. 2 mit vollen Linien dargestellten Position in die strichliert dargestellte Position 12' und drücken die Querdrähte Q₁, Q₂ gegen in Vorschubrichtung verlaufende Führungsschienen 15, die mit entsprechenden, aus verschleißfestem Material bestehenden Anschlag- und Gleitflächen 16 sowie Nuten 17 (Fig. 3) zur Aufnahme eines einzelnen Längsdrahtes oder auch zur Aufnahme eines aus dicht nebeneinander liegenden Längsdrähten gebildeten Doppeldrahtes versehen sind und die bis zur ersten Schweißlinie S₁ reichen. Zwischen den Längsdrähten L sind weitere Anschlagschienen 18 angeordnet, an deren aus verschleißfestem Material bestehenden Anschlagund Gleitfläche 19 die Querdrähte Q₁, Q₂ geführt werden. Die Anschlagschienen 18 sind an einem quer zur Längsdrahtschar angeordneten Träger 20 befestigt und erstrecken sich von der in Längsdrahtvorschubrichtung ersten Einschußlinie E₁ bis über die zweite Schweißlinie S₂ hinaus. An dem Träger 20 sind außerdem die Führungsschienen 15 befestigt.

Anschließend werden die Querdrähte Q₁, Q₂ mit Hilfe der Tragarme 12 entsprechend dem Doppelpfeil P₅ in die Schweißlinien S₁, S₂ transportiert, wobei die Querdrähte zwischen den Ausnehmungen 13 der Tragarme 12 einerseits und den Anschlag- und Gleitflächen 16 bzw. 19 anderseits formschlüssig gehalten werden und entlang dieser Anschlagund Gleitflächen gleiten.

In Fig. 4 ist in Form eines Geschwindigkeit-Zeit-Diagrammes jeweils ein Beispiel für den Verlauf der Vorschubgeschwindigkeit v(R) der Längsdraht-Vorschubvorrichtung 4 während eines Arbeitstaktes und für den Verlauf der Vorlaufgeschwindigkeit v₁(T) und der Rücklaufgeschwindigkeit v₂(T) der Querdraht-Überführvorrichtung 10 während eines Arbeitszyklus dargestellt. Dabei sind die Dauer der Vorlaufbewegung der Querdraht-Überführvorrichtung 10 mit t₁ (T) und die Dauer der Rücklaufbewegung mit t₂(T) bezeichnet. Die Vorlaufgeschwindigkeit v₁(T) und die Rücklaufge- schwindigkeit v₂(T) des Tragbalkens 11 und der Tragarme 12 sind zweckmäßig gleich und haben beispielsweise bei einem Kurbeltrieb als Antriebsmechanismus für die Querdraht-Überführvorrichtung 10 einen angenäherten sinusförmigen Verlauf.

Wie Fig. 4 zu entnehmen ist, ist die Dauer t(R) der Betätigung der Längsdraht-Vorschubvorrichtung 4 kleiner als die Dauer t₁(T) der Vorlaufbewegung der Querdraht-Überführvorrichtung 10, so daß sich eine Relativbewegung zwischen den Längs- und Querdrähten ergibt. Ferner ist die Vorschubgeschwindigkeit v(R) der Längsdraht-Vorschubvorrichtung 4 von der Vorlaufgeschwindigkeit v₁(T) der Querdrant-Über- führvorrichtung 10 verschieden. Ein durch diese Relativbewegung bedingtes Herausrutschen der Querdrähte Q₁, Q₂ aus den Ausnehmungen 13 der Transportarme 12 während der Vorschubbewegung wird durch das formschlüssige Einspannen der Querdrähte Q₁, Q₂ zwischen den Ausnehmungen 13 und den Führungsschienen 15 sowie Anschlagschienen 18 verhindert. Nachdem die Tragarme 12 die Querdrähte Q₁, Q₂ in die Schweißlinien S₁, S₂ befördert haben, wo die Querdrähte Q₁, Q₂ durch die Elektroden 2, 2' bzw 3, 3' mit den Längsdrähten L verschweißt werden, werden die Tragarme 12 durch Verschwenken des Tragbalkens 11 entsprechend dem Doppelpfeil P₆ gesenkt und durch Verschieben des Tragbalkens 11 entsprechend dem Doppelpfeil P₅ in die Querdraht-Aufnahmestellung zurückbewegt, wodurch die Ausnehmungen 13 wieder in die Einschußlinien E₁, E₂ gelangen, wo sie weitere Querdrähte aufnehmen können. Wie schon erwähnt, läuft die Bewegung kontinuierlich ab.

Das erläuterte Ausführungsbeispiel kann im Rahmen des allgemeinen Erfindungsgedankens verschiedentlich abgewandelt werden. So können beispielsweise an den Transportarmen 12 mehr als zwei Ausnehmungen 13 zur Aufnahme von Querdrähten ausgebildet sein, wenn die Einschußlinien, d.h. die Einschußkanäle für die Querstäbe, und die Schweißlinien, d.h. die Elektrodenreihen, hinsichtlich ihres gegenseitigen Abstandes in Längsdrahtvorschubrichtung einstellbar sind, um verschiedene Abstände E̅₁̅ E̅₂̅ bzw. S̅₁̅ S̅₂̅ zu ermöglichen.

## Patentansprüche

1. Doppelpunktschweißmaschine zum Herstellen von Drahtgittern aus einander rechtwinkelig kreuzenden Längs-(L) und Querdrähten (Q₁,Q₂), mit in Längsdrahtvorschubrichtung (P₁) in vorbestimmten, gegenseitigen Abstand angeordneten, quer zur Längsdrahtvorschubrichtung verlaufenden Schweißlinien (S₁,S₂) aus Ober- (2,2′) und Unterelektroden (3,3′), mit einer Vorrichtung zum Zuführen von zwei Querdrähten längs zweier, quer zur Längsdrahtvorschubrichtung verlaufender, vor den Schweißlinien in deren vorbestimmten Abstand zueinander angeordneter Einschußlinien (E₁, E₂), mit einer Vorrichtung zum Überführen der Querdrähte von den Einschußlinien in die Schweißlinien, wobei diese Vorrichtung mehrere an einem gemeinsamen Tragbalken (11) befestigte, mit im Abstand der Einschußlininien angeordneten Ausnehmungen (13) für die Querdrähte versehene Tragarme (12) aufweist, die mittels des Tragbalkens in Längsdrahtvorschubrichtung zyklisch vor- und zurückbewegbar sind, und mit einer Steuereinrichtung, über welche eine Elektrodenreihe je Schweißlinie taktweise heb- und senkbar und die Zuführ- und Überführvorrichtungen betätigbar sind, dadurch gekennzeichnet, daß mit einer an sich bekannten, über die Steuereinrichtung betätigbaren Vorrichtung (4) zum Vorschieben der Längsdrähte zu den Schweißlinien (S₁, S₂) zugleich das geschweißte Drahtgitter aus den Schweißlinien ausschiebbar ist, daß die Geschwindigkeit (v₁(T)) der Vorlaufbewegung des Tragbalkens (11) und die Geschwindigkeit (v(R)) des Arbeitstaktes der Längsdraht-Vorschubvorrichtung (4) unterschiedlich groß sind und die Dauer (t₁ (T)) der Vorlaufbewegung des Tragbalkens (11) größer als die Dauer (t(R)) des Arbeitstaktes der Längsdraht-Vorschubvorrichtung (4) ist, und daß eine Einspannvorrichtung (15, 18) vorgesehen ist, mit welcher die Querdrähte während des Überführens aus den Einschußlinien (E₁, E₂) in die Schweißlinien (S₁, S₂) formschlüssig und relativ zu den Längsdrähten verschiebbar festhaltbar sind.

2. Schweißmaschine nach Anspruch 1, dadurch gekennzeichnet, daß die Einspannvorrichtung auf der den Tragarmen (12) gegenüberliegenden Seite der Querdrähte eine Anschlageinrichtung (15, 18) für die Querdrähte aufweist.

3. Schweißmaschine nach Anspruch 2, dadurch gekennzeichnet, daß die Anschlageinrichtung mehrere Anschlagschienen (18) aufweist, die sich je in den Lücken zwischen den Längsdrähten von der in Längsdrahtvorschubrichtung ersten Querdraht-Einschußlinie (E₁) bis zumindest zu der in Längsdrahtvorschubrichtung zweiten Schweißlinie (S₂) erstrecken und an ihrer Unterseite mit einer Anschlag- und Gleitfläche (19) versehen sind.

4. Schweißmaschine nach den Ansprüchen 2 und 3, dadurch gekennzeichnet, daß die Anschlageinrichtung Führungen (15) aufweist, die mit einer den Querdrähten zugekehrten Anschlag- und Gleitfläche (16) und mit einer Nut (17) zur Aufnahme mindestens eines Längsdrahtes versehen sind.

5. Schweißmaschine nach einem der Ansprüche 1 bis 4, dadurch gekennzeichnet, daß die Längsdraht-Vorschubvorrichtung (4) mehrere gemeinsam antreibbare Rollenpaare (7, 8) je Längsdraht aufweist.

6. Schweißmaschine nach einem der Ansprüche 1 bis 5, dadurch gekennzeichnet, daß die Längsdraht-Vorschubvorrichtung (4) über die Steuereinrichtung in einem von der durch den gegenseitigen Abstand der Schweißlinien bedingten Querdrahtteilung abweichenden Arbeitstakt betätigbar ist.

7. Schweißmaschine nach einem der Ansprüche 1 bis 6, dadurch gekennzeichnet, daß entlang der Einschußlinien (E₁, E₂) der Querdrähte mehrere, an die Querdrähte federnd anpreßbare Anpreßfinger (14) angeordnet sind.

## Claims

1. Duplex spot welder for making wire grids consisting of longitudinal (L) and transverse wires (Q₁, Q₂) intersecting one another at a right angle, comprising welding lines (S₁,S₂) consisting of upper (2, 2′) and lower electrodes (3, 3′) extending transversely to the feed direction (P₁) of the longitudinal wires and arranged at a predetermined distance from one another in the feed direction of the longitudinal wires, comprising a device for supplying two transverse wires along two weft lines (E₁, E₂) extending transversely to the feed direction of the longitudinal wires and arranged in front of the welding lines at the predetermined distance from one another, comprising a device for transferring the transverse wires from the weft lines to the welding lines, this device having a plurality of supporting arms (12) secured to a common supporting beam (11) and provided with recesses (13) for the transverse wires arranged at a distance from the weft lines, wherein said supporting arms can be moved cyclically to and fro in the feed direction of the longitudinal wires by means of the supporting beam, and comprising a control means, by means of which a row of electrodes in each welding line can be raised and lowered in a timed sequence and the supply and transfer devices can be actuated, characterised in that the welded wire grid can simultaneously be displaced out of the welding lines by means of a device (4) known per se actuated by the control means for feeding the longitudinal wires to the welding lines (S₁, S₂), that the speed (v₁(T)) of the forward movement of the supporting beam (11) and the speed (v(R)) of the operating cycle of the feeding device (4) for the longitudinal wires are of different magnitudes and the duration (t₁(T)) of the forward movement of the supporting beam (11) is greater than the duration (t(R)) of the operating cycle of the feeding device (4) for the longitudinal wires, and that a clamping device (15, 18) is provided, by means of which the transverse wires can be frictionally held displaceable relative to the longitudinal wires during the transfer from the weft lines (E₁, E₂) to the welding lines (S₁, S₂).

2. Welder according to claim 1, characterised in that the clamping device has a stop means (15, 18) for the transverse wires on the side of the transverse wires opposite the supporting arms (12).

3. Welder according to claim 2, characterised in that the stop means has a plurality of stop bars (18), each extending in the gaps between the longitudinal wires from the first transverse wire weft line (E₁) in the feed direction of the longitudinal wires to at least the second welding line (S₂) in the feed direction of the longitudinal wires and provided on their undersides with a stop and slide face (19).

4. Welder according to claims 2 and 3, characterised in that the stop means has guides (15) which are provided with a stop and slide face (16) directed towards the transverse wires and a groove (17) for receiving at least one longitudinal wire.

5. Welder according to one of claims 1 to 4, characterised in that the feeding device (4) for the longitudinal wires has a plurality of jointly driven roller pairs (7, 8) per longitudinal wire.

6. Welder according to one of claims 1 to 5, characterised in that the feeding device (4) for the longitudinal wires can be actuated by the control means in an operating cycle deviating from the transverse wire spacing determined by the distance between the welding lines.

7. Welder according to one of claims 1 to 6, characterised in that a plurality of pressure fingers (14) that can be pressed resiliently against the transverse wires are provided along the weft lines (E₁, E₂) of the transverse wires.

## Revendications

1. Machine de soudage en deux points pour fabriquer des treillis métalliques constitués de baguettes longitudinales (L) et transversales (Q₁, Q₂) se croisant mutuellement à angle droit, comprenant des lignes de soudage (S₁, S₂) constituées d'électrodes supérieures (2, 2′) et inférieures (3, 3′), qui sont agencées avec espacement mutuel prédéterminé dans la direction d'avance (P₁) des baguettes longitudinales, et s'étendent transversalement par rapport à la direction d'avance des baguettes longitudinales ; un dispositif d'amenée de deux baguettes transversales le long de deux lignes d'insertion (E₁, E₂) s'étendant transversalement par rapport à la direction d'avance des baguettes longitudinales et agencées avant les lignes de soudage, selon l'espacement mutuel prédéterminé de ces dernières ; un dispositif pour transférer les baguettes transversales des lignes d'insertion aux lignes de soudage, ce dispositif présentant plusieurs bras de support (12) qui sont fixés à une traverse commune de support (11), sont munis d'évidements (13) destinés aux baguettes transversales et agencés selon l'espacement des lignes d'insertion, et peuvent être cycliquement animés d'un mouvement d'avance et de recul, au moyen de la traverse de support, dans la direction d'avance des baguettes longitudinales ; et un dispositif de commande par l'intermédiaire duquel une rangée d'électrodes peut être soulevée et abaissée par intermittence pour chaque ligne de soudage, et les dispositifs d'amenée et de transfert peuvent être actionnés, caractérisée par le fait que le treillis métallique soudé peut être simultanément extrait des lignes de soudage par un dispositif (4) connu par lui-même, actionnable par l'intermédiaire du dispositif de commande et assurant l'avance des baguettes longitudinales vers les lignes de soudage (S₁, S₂) ; par le fait que la vitesse [v₁(T)] du mouvement d'avance de la traverse de support (11) et la vitesse [v(R) ] du cycle de travail du dispositif (4) d'avance des baguettes longitudinales sont différentes, et la durée [t₁(T)] du mouvement d'avance de la traverse de support (11) est supérieure à la durée [t(R)] du cycle de travail du dispositif (4) d'avance des baguettes longitudinales ; et par le fait qu'il est prévu un dispositif d'ablocage (15, 18) à l'aide duquel, au cours du transfert des lignes d'insertion (E₁, E₂) aux lignes de soudage (S₁, S₂), les baguettes transversales peuvent être verrouillées à demeure par conformation et avec mobilité par rapport aux baguettes longitudinales.

2. Machine de soudage selon la revendication 1, caractérisée par le fait que le dispositif d'ablocage présente, du côté des baguettes transversales opposé aux bras de support (12), un système de butée (15, 18) pour lesdites baguettes transversales.

3. Machine de soudage selon la revendication 2, caractérisée par le fait que le système de butée comporte plusieurs rails de butée (18) qui s'étendent chacun dans les intervalles entre les baguettes longitudinales, de la ligne (E₁) d'insertion des baguettes transversales qui occupe la première position dans la direction d'avance des baguettes longitudinales, au moins jusqu'à la ligne de soudage (S₂) occupant la seconde position dans la direction d'avance des baguettes longitudinales, et qui sont pourvus d'une surface de butée et de glissement (19) à leur face inférieure.

4. Machine de soudage selon les revendications 2 et 3, caractérisée par le fait que le système de butée présente des guides (15) dotés d'une surface de butée et de glissement (16) tournée vers les baguettes transversales, et d'une gorge (17) pour recevoir au moins une baguette longitudinale.

5. Machine de soudage selon l'une des revendications 1 à 4, caractérisée par le fait que le dispositif (4) d'avance des baguettes longitudinales présente, pour chaque baguette longitudinale, plusieurs paires de galets (7, 8) pouvant être entrainées conjointement.

6. Machine de soudage selon l'une des revendications 1 à 5, caractérisée par le fait que le dispositif (4) d'avance des baguettes longitudinales peut être actionné, par l'intermédiaire du dispositif de commande, selon un cycle de travail différant de la répartition des baguettes transversales conditionnée par l'espacement mutuel des lignes de soudage.

7. Machine de soudage selon l'une des revendications 1 à 6, caractérisée par le fait que plusieurs doigts presseurs (14), pouvant être pressés élastiquement contre les baguettes transversales, sont disposés le long des lignes (E₁, E₂) d'insertion des baguettes transversales.
